**Europäisches Patentamt**

**European Patent Office**

**Office européen des brevets**

(19)

(11) Veröffentlichungsnummer : **0 387 320 B1**

(12) **EUROPÄISCHE PATENTSCHRIFT**

(45) Veröffentlichungstag der Patentschrift :
**12.08.92 Patentblatt 92/33**

(51) Int. Cl.⁵ : **F02B 37/12, F02B 37/00**

(21) Anmeldenummer : **89909162.3**

(22) Anmeldetag : **24.08.89**

(86) Internationale Anmeldenummer :
**PCT/DE89/00555**

(87) Internationale Veröffentlichungsnummer :
**WO 90/03503 05.04.90 Gazette 90/08**

(54) **VERFAHREN UND VORRICHTUNG ZUR LADEDRUCKREGELUNG.**

(30) Priorität : **29.09.88 DE 3832965**

(43) Veröffentlichungstag der Anmeldung :
**19.09.90 Patentblatt 90/38**

(45) Bekanntmachung des Hinweises auf die
Patenterteilung :
**12.08.92 Patentblatt 92/33**

(84) Benannte Vertragsstaaten :
**DE GB IT**

(56) Entgegenhaltungen :
**GB-A- 182 786**
**US-A- 4 292 806**

(73) Patentinhaber : **ROBERT BOSCH GMBH**
**Postfach 30 02 20**
**W-7000 Stuttgart 30 (DE)**

(72) Erfinder : **BONITZ, Jörg**
**Marsstr. 19**
**W-7130 Mühlacker (DE)**
Erfinder : **ROHDE, Siegfried**
**Seitenstr. 10**
**W-7141 Oberriexingen (DE)**
Erfinder : **MILLER, Bernhard**
**Nobileweg 11B**
**W-7000 Stuttgart 40 (DE)**
Erfinder : **KÜNZEL, Walter**
**Schönbeinstr. 28**
**W-7150 Ludwigsburg (DE)**

## Beschreibung

Die Erfindung betrifft ein Verfahren und eine Vorrichtung zum Regeln des Ladedrucks an einer Brennkraftmaschine mit einem ersten und einem zweiten Saugtrakt, deren Saugdrücke jeweils geregelt werden.

## Stand der Technik

Bekannt ist eine Vorrichtung zur Ladedruckregelung (siehe z.B. US-A-4 292 806), die zwei Druckfühler aufweist, die jeweils den Saugtraktdruck in einem der beiden Saugtrakte messen. Diese gemessenen Saugtraktdrücke werden jeweils mit einem Sollwert verglichen und aus den jeweiligen Regelabweichungswerten bestimmt jeweils eines von zwei Mitteln zur Regelung ein Tastverhältnis für ein Bypassventil an jeweils einer der beiden Ladeturbinen.

Bei der bekannten Vorrichtung kommt es dann zu unterschiedlichen Saugtraktdrücken, wenn die beiden Druckfühler nicht identisch arbeiten, was häufig der Fall ist.

Der Erfindung liegt die Aufgabe zugrunde, ein Verfahren zur Ladedruckregelung anzugeben, mit dem die Ladedrücke in zwei Saugtrakten mit hoher Genauigkeit auf jeweils denselben Wert geregelt werden können. Der Erfindung liegt weiterhin die Aufgabe zugrunde, eine Vorrichtung zum Ausführen eines solchen Verfahrens anzugeben.

## Vorteile der Erfindung

Die Erfindung ist für das Verfahren durch die Merkmale der nebengeordneten Ansprüche 1 bzw. 2 und für die Vorrichtung durch die Merkmale der nebengeordneten Ansprüche 3 bzw. 4 gegeben.

Bei der Vorrichtung gemäß Anspruch 3 ist nur noch an einen Saugtrakt ein Druckfühler angeschlossen. Zusätzlich ist jedoch ein Differenzdruckfühler zwischen den beiden Saugtrakten vorhanden. Mit dieser Vorrichtung läßt sich ein Verfahren durchführen, gemäß dem der Saugdruck in demjenigen Saugtrakt, an den der Druckfühler angeschlossen ist, direkt mit Hilfe des gemessenen Drucksignales geregelt wird, während der Druck im anderen Saugtrakt mit Hilfe des Drucksignales vom anderen Saugtrakt und des Differenzdruckes geregelt wird. Diese Anordnung und das zugehörige Verfahren stellen an die Genauigkeit des Druckfühlers und des Differenzdruckfühlers keine hohen Anforderungen. Es ist lediglich darauf zu achten, daß der Differenzdruckfühler dann, wenn der Differenzdruck 0 ist, diesen Differenzdruck 0 korrekt anzeigt.

Die Vorrichtung gemäß Anspruch 4 zeichnet sich dadurch aus, daß nur noch ein einziger Druckfühler vorhanden ist, der abwechselnd mit den beiden Saugtrakten verbindbar ist. Da somit zur Druckmessung in beiden Saugtrakten derselbe Druckfühler verwendet wird, sind identische Saugtraktdrücke problemlos einstellbar, unabhängig von der Genauigkeit des Druckfühlers. Das Verfahren mit der eben genannten Anordnung arbeitet so, daß in der Zeit, in der das Drucksignal für den einen Saugtrakt gemessen wird, das Drucksignal für den anderen Saugtrakt gehalten wird, damit es zur Regelung bereitsteht.

Zeichnung

Die Erfindung wird im folgenden anhand von durch Figuren veranschaulichten Ausführungsbeispielen näher erläutert. Es zeigen:

Fig. 1 eine Vorrichtung für Ladedruckregelung mit einem Druckfühler und einem Differenzdruckfühler; und

Fig. 2 eine Vorrichtung zur Ladedruckregelung mit einem einzigen Druckfühler, der abwechselnd mit zwei Saugtrakten verbindbar ist.

## Beschreibung von Ausführungsbeispielen

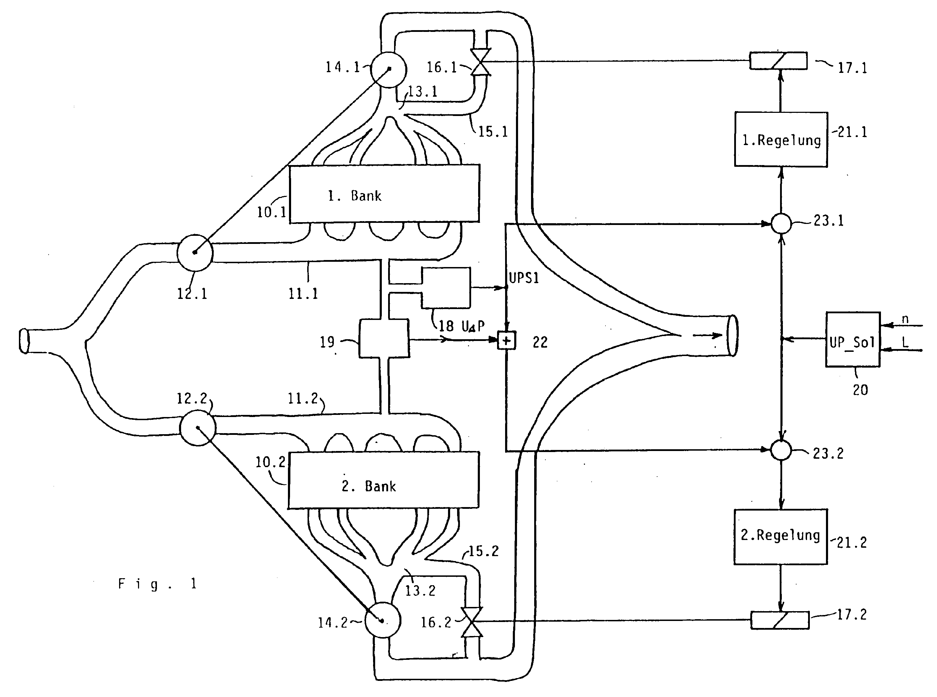

Die Vorrichtung zur Ladedruckregelung gemäß Fig. 1 ist dort an einen V-Motor mit 8 Zylindern eingesetzt, der zwei Bänke 10.1 und 10.2 mit jeweils 4 Zylindern aufweist. Im Ansaugtrakt 11.1 der ersten Bank 10.1 ist ein erster Lader 12.1 angeordnet, während im zugehörigen Abgastrakt 13.1 eine erste Turbine 14.1 vorhanden ist, die vom Abgas angetrieben wird und dabei den Lader 12.1 treibt. Die antreibende Verbindung zwischen Lader 12.1 und Turbine 14.1 ist durch eine durchgezogene Linie dargestellt. In einer Bypassleitung 15.1 zur ersten Turbine 14.1 ist ein durch eine erste Taktsteuerung 17.1 treibbares erstes Taktventil 16.1 angeordnet. Durch die Ansteuerung des Taktventiles 16.1 ist die Bypassdurchflußrate und damit die Drehzahl der Turbine 14.1 und dadurch wiederum der vom ersten Lader 12.1 bereitgestellte Ladedruck einstellbar.

Entsprechende Bauteile wie an der ersten Bank 10.1 sind an der zweiten Bank 10.2 vorhanden. Entsprechende Bezugszeichen tragen die Zusatzkennzeichnung ".2" statt ".1".

Die Vorrichtung zur Ladedruckregelung verfügt über einen Druckfühler 18, einen Differenzdruckfühler 19, einen Sollwertgeber 20, ein erstes Mittel zur Regelung 21.1 und ein zweites Mittel zur Regelung 21.2. Außerdem sind eine Additionsstelle 22 sowie eine erste Subtraktionsstelle 23.1 und eine zweite Subtraktionsstelle 23.2 vorhanden. Der Druckfühler 18 steht mit dem ersten Saugtrakt 11.1 in Verbindung und der Differenzdruckfühler 19 verbinden den ersten Saugtrakt 11.1 mit dem zweiten Saugtrakt 11.2.

Die Funktion dieser Anordnung ist die folgende.

Der ersten Subtraktionsstelle 22.1 wird das vom Druckfühler 18 ausgegebene Signal, nämlich ein Spannungssignal UPS1, zugeführt. Dort wird dieses Signal von einer Sollspannung UP_Soll abgezogen. Die Regelabweichung UP1 wird dem ersten Mittel zur Regelung 21.1 zugeführt, das in üblicher Weise abhängig von der Regelabweichung ein Taktsignal an die erste Taktsteuerung 17.1 abgibt.

Insoweit unterscheidet sich die Funktion der dargestellten Anordnung in keiner Weise von der aus dem Stand der Technik bekannten Anordnung.

Während bei der Anordnung gemäß dem Stand der Technik die Ladedruckregelung für die zweite Bank völlig identisch zur Ladedruckregelung für die erste Bank arbeitet, also noch ein zweiter Druckfühler vorhanden ist, der mit dem zweiten Saugtrakt in Verbindung steht, gilt für die dargestellte Anordnung Abweichendes. Der zweiten Subtraktionsstelle 23.2 wird nämlich nicht eine von einem zweiten Druckfühler gemessene Spannung zugeführt, sondern die Subtraktionsstelle 23.2 erhält ein Signal, das der Summe des Drucksignales UPS1 vom Druckfühler 18 und des Differenzdrucksignales U P vom Differenzdruckfühler 19 entspricht. Die Summe dieser beiden Signale wird in der Additionsstelle 22 gebildet. Der Differenzdruckfühler 19 ist so geschaltet, daß er dann, wenn der Druck im zweiten Saugtrakt 11.2 größer ist als im ersten Saugtrakt 11.1, ein Signal mit einem Vorzeichen ausgibt, das dem Vorzeichen des Signales UPS1 vom Druckfühler 18 entspricht. Im übrigen erfolgt die Regelung des Ladedrucks für die zweite Bank 10.2 ganz entsprechend zur oben beschriebenen Regelung für die erste Bank 10.1. Der Unterschied liegt also nur darin, daß die Istwerte für die Regelung unterschiedlich gebildet werden.

Beim Kalibrieren der Anordnung ist lediglich darauf zu achten, daß der Differenzdruckfühler 19 bei der Druckdifferenz 0 ein Signal vom Wert 0 ausgibt. Im übrigen sind die Genauigkeitsanforderungen an den Druckfühler 18 und den Differenzdruckfühler 19 nicht hoch, da es nur darauf ankommt, in beiden Saugtrakten 11.1 und 11.2 jeweils denselben Druck einzustellen, und dies dann gewährleistet ist, wenn der Differenzdruckfühler 19 dann den Wert 0 ausgibt.

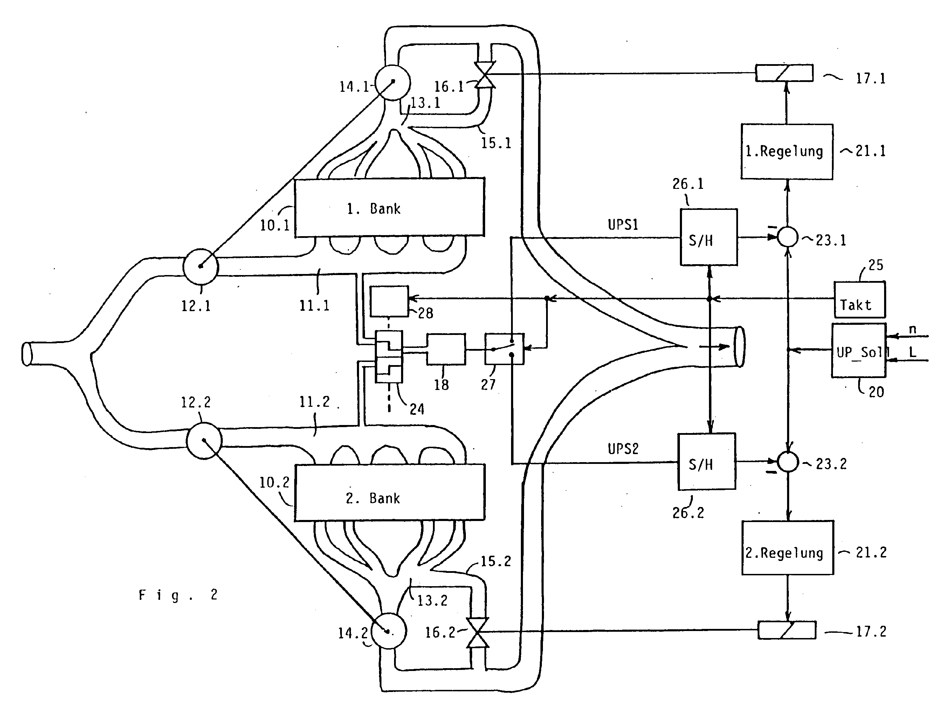

Anhand von Fig. 2 wird nun eine Anordnung erläutert, die noch kostengünstiger herstellbar ist als die Anordnung gemäß Fig. 1, und zwar weil nicht ein Druckfühler 18 und ein Differenzdruckfühler 19 verwendet werden, sondern nur ein einziger Druckfühler 18. Bei der Anordnung gemäß Fig. 2 fehlt neben dem Differenzdruckfühler 19 auch die Additionsstelle 22. Dafür sind als zusätzliche Funktionsteile ein Umschaltventil 24 und ein Taktgeber 25 vorhanden, der eine erste Abtast/Halte-Schaltung 26.1, eine zweite Abtast/Halte-Schaltung 26.2, einen Signalumschalter 27 und einen Ventilumschalter 28 ansteuert. Alle übrigen Funktionsteile entsprechen genau denen der Anordnung gemäß Fig. 1.

Das Umschaltventil 24 verfügt über zwei Schaltstellungen. In der ersten, dargestellten Schaltstellung verbindet es den ersten Saugtrakt 11.2 mit dem Druckfühler 18. Entsprechend verbindet es in seiner zweiten Stellung den zweiten Saugtrakt 11.2 mit dem Druckfühler 18. Zwischen den beiden Stellungen ist das Ventil pneumatisch umschaltbar, was durch den Ventilumschalter 28 entsprechend dem vom Taktgeber 25 vorgegebenen Takt erfolgt. Die Taktfrequenz beträgt im Beispielsfall 10 Hz.

Immer dann, wenn der Druckfühler 18 gerade mit dem ersten Saugtrakt 11.1 verbunden ist, schaltet der Signalumschalter 27 auf das Taktsignal vom Taktgeber 25 hin das Ausgangssignal USP1 vom Druckfühler 18 auf die erste Abtast/Halte-Schaltung 26.1, von wo sie auf die erste Subtraktionsstelle 23.1 gelangt. Dort erfolgt wiederum die Differenzbildung zu einem Sollwert UP_Soll, der abhängig von Werten der Drehzahl n und einer lastabhängigen Größe L, z. B. des Drosselklappenwinkels, vom Sollwertgeber 20 ausgegeben wird. Der weitere Regelablauf erfolgt, wie oben anhand von Fig. 1 beschrieben.

Wurde durch das Taktsignal vom Taktgeber 25 dagegen der Druckfühler 18 mit dem zweiten Saugtrakt 11.2 verbungen, schaltet entsprechend der Signalumschalter 27 das Ausgangssignal USP2 vom Druckfühler 18 auf die zweite Abtast/Halte-Schaltung 26.1 und von dort auf die zweite Subtracktionsstelle 23.2. Für die weitere Regelung gilt das oben Gesagte entsprechend.

Im praktischen Anwendungsfall sind möglichst viele der beschriebenen Funktionsgruppen durch die Funktion eines Mikrocomputers realisiert. Es handelt sich insbesondere um den Sollwertgeber 20, der dann zum Beispiel als Speicher ausgeführt ist, die beiden Mittel zur Regelung 21.1 und 21.2, die Subtraktionsstellen 23.1 und 23.2, die Additionsstelle 22 und die Abtast/Halte-Schaltungen 26.1 und 26.2. Die Abtast/ Halte-Funktionen müssen nicht notwendigerweise an der dargestellten Stelle des Signalablaufes vorhanden sein. Sie können ihre Funktion z. B. auch an den Ausgängen der Mittel zur Regelung ausüben. Ein Mikrocomputer tastet z. B. den Druckfühler 18 in vorgegebenen Zeitabständen immer dann ab, wenn dieser gerade auf einen der beiden Saugtrakte geschaltet ist. Der gemessene Wert wird zum Berechnen eines neuen Stellwertes für den zugehörigen Regelkreis verwendet. Der Stellwert im anderen Regelkreis wird jeweils so lange gehalten und an die zugehörige Taktsteuerung ausgegeben, bis auch für diesen Regelkreis ein neuer Stellwert errechnet wird.

Die oben beschriebenen Funktionsabläufe entsprechen bevorzugten Ausführungsformen. Wesentlich für die Erfindung sind jedoch nicht die detailliert beschriebenen Funktionsabläufe, sondern entscheidend ist, daß die Druckregelung in den zwei Saugtrakten nicht mit Hilfe zweier gesonderter Druckfühler erfolgt, sondern entweder mittels eines Druckfühlers und eines Differenzdruckfühlers oder mittels eines einzigen Druckfühlers, der abwechselnd auf die beiden Saugtrakte geschaltet wird.

## Patentansprüche

1. Verfahren zur Ladedruckregelung an einer Brennkraftmaschine mit einem ersten und einem zweiten Saugtrakt, deren Saugdrücke jeweils geregelt werden, wozu
   – der Ladedruck im ersten Saugtrakt gemessen wird und dieser Ladedruck auf einen Sollwert geregelt wird,
   **dadurch gekennzeichnet, daß**
   – der Differenzdruck zwischen den Ladedrücken im ersten und zweiten Saugtrakt gemessen wird und der Ladedruck im zweiten Saugtrakt unter Berücksichtigung des Ladedrucks im ersten Saugtrakt und des Differenzdruckes auf den Sollwert geregelt wird.

2. Verfahren zur Ladedruckregelung an einer Brennkraftmaschine mit einem ersten und einem zweiten Saugtrakt, wozu
   – die Ladedrücke in den Saugtrakten gemessen werden und die gemessenen Ladedrücke jeweils auf denselben Sollwert geregelt werden,
   **dadurch gekennzeichnet**, daß
   – die Ladedrücke im ersten und zweiten Saugtrakt abwechselnd durch Umschalten der Drücke auf einen einzigen Druckfühler gemessen werden, und
   – der für den einen Saugtrakt ermittelte Regelwert gehalten wird, während der Ladedruck für den anderen Saugtrakt gemessen und geregelt wird.

3. Vorrichtung zur Ladedruckregelung an einer Brennkraftmaschine mit einem ersten Saugtrakt (11.1) und einem zweiten Saugtrakt (11.2), mit
   – einer Druckmeßeinrichtung (18, 19),
   – einem ersten Mittel zum Regeln (21.1) des Ladedrucks im ersten Saugtrakt auf einen Sollwert, und
   – einem zweiten Mittel zum Regeln (21.2) des Ladedrucks im zweiten Saugtrakt auf den Sollwert,
   **dadurch gekennzeichnet**, daß
   – die Druckmeßeinrichtung über einen Druckfühler (18) und einen Differenzdruckfühler (19) verfügt, wobei der Druckfühler an einen der Saugtrakte (11.1) angeschlossen ist und der Differenzdruckfühler zwischen die beiden Saugtrakte (11.1, 11.2) gelegt ist,
   – das erste Mittel zum Regeln (21.1) mit dem Druckfühler verbunden ist und das von ihm gemessene Signal als Istgröße verarbeitet, und
   – das zweite Mittel zum Regeln (21.2) mit dem Druckfühler und zusätzlich dem Differenzdruckfühler verbunden ist und die von diesen Fühlern gemessenen Signale als Istgrößen verarbeitet.

4. Vorrichtung zur Ladedruckregelung an einer Brennkraftmaschine mit einem ersten Saugtrakt (11.1) und einem zweiten Saugtrakt (11.2), mit
   – einer Druckmeßeinrichtung (18, 24, 28.) zum Messen der Ladedrücke in den beiden Saugtrakten,
   – einem ersten Mittel (21.1) zum Regeln des im ersten Saugtrakt gemessenen Ladedrucks auf einen Sollwert und
   – einem zweiten Mittel (21.2) zum Regeln des im zweiten Saugtrakt gemessenen Ladedrucks auf den Sollwert,
   **dadurch gekennzeichnet**, daß
   – die Druckmeßeinrichtung über einen einzigen Druckfühler (18) und eine Umschalteinrichtung (24, 28) zum abwechselnden Verbinden der Saugtrakte (1.1.1, 11.2) mit dem Druckfühler verfügt und
   – jedes der Mittel zum Regeln (21.1, 21.2) mit einem Mittel zum Halten (26.1, 26.2) einer Regelungsgröße für den ihm zugeordneten Saugtrakt verfügt, während der Druckfühler den Druck in dem dem anderen Mittel zur Regelung zugeordneten Saugtrakt mißt.

## Claims

1. Process for boost control on an internal-combustion engine with a first and a second suction tract, the suction pressures of which are each controlled, for which purpose
   – the boost pressure in the first suction tract is measured and this boost pressure is regulated to a desired value,

**characterized in that**
   – the differential pressure between the boost pressures in the first and second suction tracts is measured and the boost pressure in the second suction tract is regulated to the desired value by taking into account the boost pressure in the first suction tract and the differential pressure.

2. Process for boost control on an internal-combustion engine with a first and a second suction tract, for which purpose
   – the boost pressures in the suction tracts are measured and the measured boost pressures are each regulated to the same desired value,

**characterized in that**
   – the boost pressures in the first and second suction tracts are measured alternately by switching the pressures to a single pressure sensor, and
   – a control value determined for one suction tract is maintained, whilst the boost pressure for the other suction tract is measured and controlled.

3. Device for boost control on an internal-combustion engine with a first suction tract (11.1) and a second suction tract (11.2), with
   – a pressure-measuring arrangement (18, 19),
   – a first means (21.1) for controlling the boost pressure in the first suction tract to a desired value, and
   – a second means (21.2) for controlling the boost pressure in the second suction tract to the desired value,

**characterized in that**
   – the pressure-measuring arrangement comprises a pressure sensor (18) and a differential-pressure sensor (19), the pressure sensor being connected to one of the suction tracts (11.1) and the differential-pressure sensor being located between the two suction tracts (11.1, 11.2),
   – the first means of control (21.1) is connected to the pressure sensor and the signal measured by it is processed as an actual value, and
   – the second means of control (21.2) is connected to the pressure sensor and additionally to the differential-pressure sensor and the signals measured by these sensors are processed as actual values.

4. Device for boost control on an internal-combustion engine with a first suction tract (11.1) and a second suction tract (11.2), with
   – a pressure-measuring arrangement (18, 24, 28) for measuring the boost pressures in the two suction tracts,
   – a first means (21.1) for controlling the boost pressure measured in the first suction tract to a desired value and
   – a second means (21.2) for controlling the boost pressure measured in the second suction tract to the desired value,

**characterized in that**
   – the pressure-measuring arrangement comprises a single pressure sensor (18) and a change-over arrangement (24, 28) for connecting the suction tracts (11.1, 11.2) alternately to the pressure sensor and
   – each of the means of control (21.1, 21.2) has a means (26.1, 26.2) for holding a control variable for the suction tract assigned to it, whilst the pressure sensor measures the pressure in the suction tract assigned to the other means of control.

## Revendications

1. Procédé pour la régulation de la pression d'admission sur un moteur à combustion interne, avec un premier et un second secteur d'aspiration, dont les pressions d'aspiration sont respectivement réglées, procédé dans lequel
   – la pression d'admission dans le premier secteur d'aspiration est mesurée et cette pression d'admission est réglée sur une valeur de consigne,

**procédé caractérisé en ce que**
   – la différence entre les pressions d'admission dans le premier et le second secteur d'aspiration est mesurée et la pression d'admission dans le second secteur d'aspiration est réglée sur la valeur de consigne en tenant compte de la pression d'admission dans le premier secteur d'aspiration et de la différence des pressions.

2. Procédé pour la régulation de la pression d'admission sur un moteur à combustion interne, avec un premier et un second secteur d'aspiration, procédé dans lequel

– les pressions d'admission dans les secteurs d'aspiration sont mesurées et les pressions d'admission mesurées sont respectivement réglées sur la même valeur de consigne,

**procédé caractérisé en ce que**

– les pressions d'admission dans le premier et le second secteur d'aspiration sont alternativement mesurées par commutation des pressions sur un détecteur de pression unique,

– la valeur de réglage déterminée pour l'un des secteurs d'aspiration est maintenue, tandis que la pression d'admission pour l'autre secteur d'aspiration est mesurée et réglée.

3. Dispositif pour la régulation de la pression d'admission sur un moteur à combustion interne avec un premier secteur d'aspiration (11.1) et un second secteur d'aspiration (11.2), avec

– un moyen de mesure de la pression (18, 19),

– un premier moyen pour le réglage (21.1) de la pression d'admission dans le premier secteur d'aspiration sur une valeur de consigne, et

– un second moyen pour le réglage (21.2) de la pression d'admission dans le second secteur d'aspiration sur la valeur de consigne,

**dispositif caractérisé en ce que**

– le moyen de mesure de la pression dispose d'un détecteur de pression (18) et d'un détecteur de différence de pression (19), le détecteur de pression étant raccordé à un des secteurs d'aspiration (11.1) tandis que le détecteur de différence de pression est placé entre les deux secteurs d'aspiration (11.1, 11.2),

– le premier moyen pour le réglage (21.1) est relié au détecteur de pression et le signal qu'il mesure est mis en oeuvre en tant que grandeur réelle,

– le second moyen pour le réglage (21.2) est relié au détecteur de pression et, en outre, au détecteur de différence de pression et les signaux mesurés par ces détecteurs sont mis en oeuvre en tant que grandeurs réelles.

4. Dispositif pour la régulation de la pression d'admission sur un moteur à combustion interne avec un premier secteur d'aspiration (11.1) et un second secteur d'aspiration (11.2), avec

– un moyen de mesure de la pression (18, 24, 28) pour mesurer les pressions d'admission dans les deux secteurs d'aspiration,

– un premier moyen (21.1) pour le réglage de la pression d'admission, mesurée dans le premier secteur d'aspiration, sur une valeur de consigne,

– un second moyen (21.2) pour le réglage de la pression d'admission, mesurée dans le second secteur d'admission, sur la valeur de consigne,

**dispositif caractérisé en ce que**

– le moyen de mesure de la pression dispose d'un détecteur de pression (18) unique et d'un moyen de commutation (24, 28) pour relier alternativement les secteurs d'aspiration (11.1, 11.2) avec le détecteur de pression,

– chacun des moyens pour le réglage (21.1, 21.2) dispose d'un moyen pour maintenir (26.1, 26.2) une grandeur de régulation pour le secteur d'aspiration qui lui est associé, pendant que le détecteur de pression mesure la pression dans le secteur d'aspiration associé à l'autre moyen pour la régulation.

Fig. 1

14.1 16.1 17.1
13.1
15.1
1.Regelung ~21.1
1. Bank
10.1
23.1
12.1 11.1
UPS1
18 U_ΔP
19 + 22
UP_Sol ← n
← L
20
12.2 11.2
10.2
2. Bank
23.2
15.2
2.Regelung ~21.2
13.2
14.2~ 16.2 17.2

EP 0 387 320 B1

7

Fig. 2